# FASCICULE DE BREVET EUROPEEN

(11) **EP 1 554 686 B1**
(45) Date de publication et mention de la délivrance du brevet: **25.04.2012**
(21) Numéro de dépôt: 03780262.6
(22) Date de dépôt: 09.09.2003
(51) Int. Cl.: G06K 9/03

(54) **PROCEDE POUR LE CODAGE VIDEO D'IMAGES COMPORTANT UNE INFORMATION D'ADRESSE**
VERFAHREN ZUR VIDEOKODIERUNG VON BILDERN MIT EINER ADRESSINFORMATION
METHOD OF VIDEO CODING IMAGES COMPRISING ADDRESS INFORMATION

(30) Priorité: 16.09.2002 FR 0211456
(43) Date de publication de la demande: 20.07.2005
(73) Titulaire: Solystic, 94257 Gentilly Cedex (FR)
(72) Inventeur: EL BERNOUSSI, Hicham, F-75015 Paris (FR); MOUSSION, Gilles, F-91370 Verrieres le BUISSON (FR); LHOMME, Christophe, F-75014 Paris (FR)
(74) Mandataire: Prugneau, Philippe
(86) Numéro de dépôt international: PCT/FR2003/050048
(87) Numéro de publication internationale: WO 2004/027696

(56) Documents cités:
- US-A- 4 523 330
- US-A- 5 923 792
- US-B1- 6 269 171
- US-B1- 6 295 387
- GRAHAM CHAMBERLAIN ET AL: "Video coding of mail - Development of a video coding strategy", JETPOSTE '93, FIRST EUROPEAN MEETING ON POSTAL TECHNOLOGIES,, 16 June 1993 (1993-06-16), pages 515-522, XP008085742,

## Description

L'invention concerne le tri automatique d'objets postaux et notamment les systèmes dans lesquels un processus d'évaluation automatique d'adresse par OCR est appliqué sur une image d'un objet postal comportant une information d'adresse, ce processus étant complété et amélioré par un codage vidéo dans le cas où l'information d'adresse ne peut pas être interprétée automatiquement par OCR. A l'issue d'un codage vidéo, les champs d'adresse sont généralement suffisamment renseignés pour atteindre le niveau de tri souhaité.

L'invention porte plus particulièrement sur un procédé pour le traitement par codage vidéo d'une image d'un objet postal comportant une information d'adresse en rejet d'un processus d'évaluation automatique d'adresse par OCR. Dans le document de brevet européen n°97921794, le traitement par codage vidéo d'images comportant une information d'adresse consiste dans un codage systématique de tout ou partie des différents champs du bloc d'adresse pour identifier sans équivoque le lieu de destination de l'objet postal. Différentes techniques de codage sont utilisées comme le codage par aperçu, le codage par extraction, le codage par complément, le codage par sélection.

Bien que ces différentes techniques de codage vidéo tendent à augmenter la productivité des opérateurs de codage vidéo, elles ne tirent pas complètement profit des résultats fournis par le processus d'évaluation automatique d'adresse par OCR. De façon générale, le résultat d'un processus d'évaluation automatique d'adresse par OCR se présente sous la forme d'un vecteur d'attributs d'image contenant toutes les informations extraites par l'OCR et caractérisant l'information d'adresse (typographie de l'information d'adresse : manuscriteldactylographiée), nombre et coordonnées des lignes d'information détectées dans le bloc d'adresse par OCR ou encore pour chaque champ du bloc d'adresse, une valeur de champ à laquelle est associé un taux de confiance. Le taux de confiance associé à une valeur de champ traduit la probabilité de reconnaissance de la valeur de champ extraite par OCR.

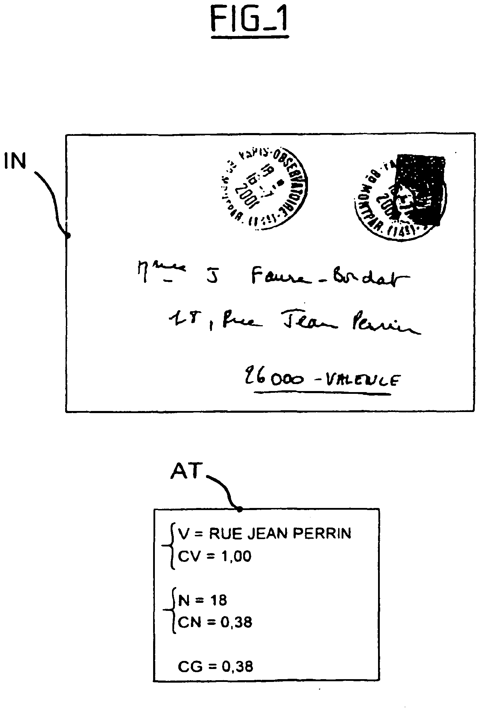

La figure 1 illustre une image comprenant une information d'adresse IN et la structure d'un vecteur d'attributs d'image AT avec des champs d'adresse V et N renseignés, le champ V identifiant le nom de la voie (V=RUE JEAN PERRIN) dans le bloc d'adresse et le champ N identifiant le numéro dans la voie (N=18) dans le bloc d'adresse. A ces valeurs de champ d'adresse sont associés des taux de confiance CV et CN traduisant ici que le nom de la voie a été reconnu avec une probabilité de reconnaissance de 1 (taux de confiance maximal) et que le numéro dans la voie a été reconnu avec une probabilité de reconnaissance de 0,38. En outre, dans le vecteur d'attributs d'image, un taux de confiance conjoint CG correspondant au produit de l'ensemble des taux de confiance associés aux champs de l'adresse donne une indication de la probabilité de reconnaissance globale de l'information d'adresse. Ce taux de confiance conjoint est utilisé par le processus d'évaluation automatique par OCR pour décider de rejeter une image qui devra donc être traitée par codage vidéo, la décision se faisant par exemple par comparaison du taux de confiance conjoint à une valeur de seuil prédéterminée.

Une analyse fine des résultats fournis par un processus d'évaluation automatique d'adresse par OCR lors d'une campagne de tests sur un ensemble d'images en rejet d'un processus de tri distribution géographique par exemple, a montré que les causes de rejet peuvent être classifiées par grandes catégories. Ainsi, lors de cette campagne de tests, il est apparu par exemple que :
- dans 34% des cas de rejet, les champs d'adresse V et N ont été reconnus correctement par l'OCR alors que le taux de confiance conjoint émis par l'OCR était trop faible,
- dans 14% des cas de rejet, le champ d'adresse V a été correctement reconnu mais pas le champ d'adresse N,
- dans 25% des cas de rejet, le champ d'adresse V n'a pas été reconnu correctement alors que le champ d'adresse N a été reconnu correctement,
- dans 26% des cas de rejet, les champs d'adresse V et N n'ont pas été reconnus correctement,
- et que 1% des cas de rejet concerne d'autres situations de défaut de reconnaissance correcte.

A partir de ce constat, il est apparu possible de filtrer le groupe des 34% d'images en rejet sur la base d'un seuillage du taux de confiance conjoint. De même, le groupe des 14% d'images en rejet pouvait être filtré sur la base d'un seuillage du taux de confiance CV tandis que le groupe des 25% d'images en rejet pouvait être filtré sur la base d'un seuillage du taux de confiance CN. En classifiant ainsi les images en rejet selon des catégories, il devient possible d'appliquer à chaque catégorie de rejets un traitement par codage vidéo spécifique et adapté à la catégorie de rejets considérée ce qui permet de minimiser le temps opérateur et donc d'augmenter le débit du système de codage vidéo. Si une image en rejet n'entre dans aucune catégorie de rejet prédéterminée, elle devra être traitée par un codage vidéo qui balaiera l'ensemble des champs d'adresse ce qui est coûteux en temps. Il est évident que le nombre de catégories de rejet est fonction de la structure d'adresse et du nombre de champ d'adresse. On comprend donc que cette catégorisation des images en rejet permet de traiter de manière non uniforme les images en rejet mais de manière adaptative.

A cet effet, l'invention a pour objet un procédé pour le traitement par codage vidéo d'images comportant une information d'adresse en rejet d'un processus d'évaluation automatique d'adresse par OCR pour un tri distribution géographique par exemple tel que défini par la revendication 1. Bien entendu, le procédé peut être facilement généralisé à d'autres types de rejet, par exemple acheminement, boîte postale, réadressage, tri société. Le processus d'évaluation automatique d'adresse par OCR produit pour chaque image en rejet un vecteur d'attributs d'image dans lequel des taux de confiance sont associés respectivement à des valeurs de champ du bloc d'adresse. Selon l'invention, le procédé consiste à identifier pour chaque image en rejet, une catégorie de rejet correspondant à l'image en rejet par l'intermédiaire d'une cascade de filtres (dont le nombre peut varier en fonction du type de rejet que l'on souhaite traiter) appliqués sur les taux de confiance dans le vecteur d'attributs d'image associé à l'image en rejet et quand la catégorie de rejet correspondant à l'image en rejet est identifiée au niveau d'un filtre, à faire suivre ce filtrage d'une part par un codage opérateur spécifique à la catégorie de rejet de manière à compléter ou à modifier le vecteur d'attributs d'image associé à l'image en rejet et d'autre part par une évaluation du vecteur d'attributs d'image associé à l'image en rejet de manière à pouvoir décider de l'arrêt du codage vidéo pour cette image en rejet. Les différents codages opérateur pourront être implémentés respectivement dans des unités ou consoles de codage vidéo différentes ce qui présente l'avantage d'avoir des opérateurs de codage vidéo spécialisés sur une certaine catégorie de rejet ce qui accroît leur performante. Un exemple de filtrage peut consister en un seuillage sur un seul taux de confiance ou un taux de confiance conjoint ou encore en une combinaison de seuillage de plusieurs taux de confiance associés aux différents champs du bloc d'adresse. Il est possible également de raffiner un filtrage à l'aide de règles expertes et d'étendre le filtrage à des parties du vecteur d'attributs autres que les valeurs des champs d'adresse et les taux de confiance associés, sans sortir du cadre de l'invention. Dans le cas de filtrage par seuillage, il sera avantageux d'avoir des valeurs de seuil ajustables de façon dynamique par un superviseur contrôlant les proportions d'images passant à travers les différents filtres. Le réglage des valeurs de seuil permet également de pouvoir faire varier à la fois le débit et le taux d'erreur du système de codage vidéo. On sait que le codage vidéo de la totalité des champs d'adresse nécessaires au tri distribution, n'est pas considéré par les opérateurs postaux comme rentable car il s'effectue avec des débits trop faibles. Avec le procédé selon l'invention, il est possible d'écarter par la cascade de filtres les images en rejet qui ne sont pas rentables à traiter par codage vidéo. Plus particulièrement, les valeurs de seuil des filtres peuvent être ajustées pour ne retenir que des images d'objets postaux pour lesquelles un traitement par codage vidéo reste plus rapide à exécuter en comparaison avec un tri manuel des objets postaux. Les débits courants en tri manuel sont de l'ordre de 1600 à 1800 objets à l'heure ce qui signifie que pour dépasser ce débit par codage vidéo, chaque image en rejet devrait être vidéo codée en moins de 2 secondes, ce qui exclut par exemple comme opération de codage vidéo la saisie d'une longue chaîne de caractère comme la saisie du champ V (illustré sur la figure 1) indicatif du nom de voie.

L'invention est décrite plus en détail ci-après en référence aux dessins.
La figure 1 montre une image comprenant une information d'adresse et un vecteur d'attributs d'image.
La figure 2 illustre schématiquement sous la forme d'un schéma bloc le procédé selon l'invention.

Figure 1, un processus d'évaluation automatique d'adresse par OCR dans une installation de tri postal produit pour une image IN comprenant une information d'adresse, un vecteur AT d'attributs d'image constitué de valeurs de champs V,N du bloc d'adresse auxquelles sont associés à des taux de confiance CV,CN et à un taux de confiance conjoint CG qui est le produit des taux de confiance CV et CN.

Généralement, quand le taux de confiance conjoint CG est inférieur à un seuil prédéterminé, l'évaluation automatique d'adresse par OCR n'a pas pu résoudre l'adresse de façon univoque et l'image IN avec le vecteur d'attributs d'image AT sont envoyés vers un processus de traitement par codage vidéo.

Dans l'exemple de la figure 1, bien que le taux de confiance conjoint CG traduise une résolution équivoque de l'adresse, la valeur du champ d'adresse V a été reconnue de façon univoque. Pour résoudre de façon univoque l'adresse, il suffirait de solliciter un opérateur de codage vidéo pour lui faire confirmer la valeur du champ d'adresse N et en cas seulement où l'opérateur ne confirme pas la valeur, lui faire entrer une nouvelle valeur pour le champ d'adresse N. Un codage par confirmation est peu coûteux en temps opérateur et moins coûteux en temps opérateur qu'un codage par entrée d'information y compris par extraction, sélection ou complément. Selon l'invention, on cherche à identifier à partir d'une cascade de filtres sur les taux de confiance dans le vecteur d'attributs d'image AT, la catégorie de rejet correspondant à l'image. IN en rejet pour appliquer un traitement spécifique à cette catégorie de rejet, par exemple un codage par confirmation et ensuite un codage par entrée d'information.

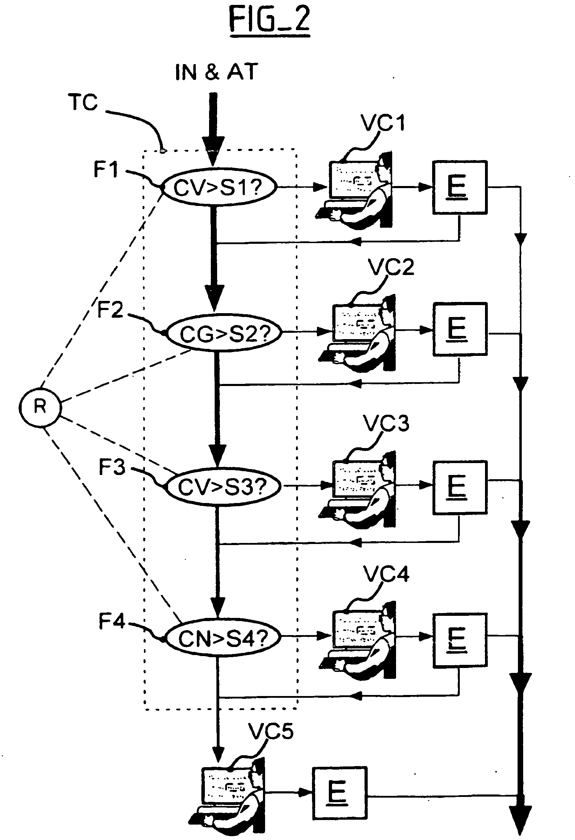

La figure 2 montre une cascade de filtres F1 à F4 suivis chacun d'un codage opérateur VC1 à VC4 et d'une évaluation E du vecteur d'attributs d'image AT. Les filtres F1 à F4 forment en quelque sorte un classifieur TC d'images en rejets et détermine autant de catégories d'images en rejets.

Dans l'exemple de la figure 2, dans chaque filtre F1 à F4, on compare un taux de confiance CV,CN,CG à une valeur de seuil S1 à S4. L'organisation des filtres de la figure 2 est celle qui a été élaborée pour la typologie des rejets exposée plus haut. Dans le filtre le plus amont F1, si le taux de confiance CV (taux de confiance relatif au nom de la voie) est supérieur au seuil S1, on effectue un codage par davier VC1 pour entrer le numéro de rue.

Dans le filtre F2 subséquent, si le taux de confiance conjoint CG est supérieur au seuil S2, on effectue un codage VC2 de confirmation par appui touche ou par synthèse vocale simultanément sur le numéro de rue et sur le nom de la voie.

Dans le filtre F3, si le taux de confiance CV (taux de confiance relatif au nom de la voie) est supérieur au seuil S3, on effectue d'abord un codage VC3 de confirmation sur le nom de la voie et ensuite un codage par davier pour entrer le numéro de voie.

Dans le filtre F4, si le taux de confiance CN (taux de confiance relatif au numéro de voie) est supérieur au seuil S4, on effectue un codage VC4 de confirmation sur le numéro de voie et un codage par davier pour entrer le nom de la voie.

En sortie de la cascade de filtres, on effectue un codage VC5 par clavier où l'opérateur renseigne l'ensemble des champs du bloc d'adresse car dans ce cas l'information codée par l'OCR n'est pas fiable.

L'enchaînement des filtres F1 à F4 est ici réalisé dans un ordre selon lequel les opérations de codage sont de plus en plus coûteuses en temps opérateur.

Avec cette typologie de rejet, les valeurs de seuils dans les filtres F1 à F4 ont été réglées de la façon suivante : pour S1 un seuil de 0,99 ; pour S2 un seuil de 0,93 ; pour S3 un seuil de 0,85 et pour S4 un seuil de 0,83.

Sur la base des ces valeurs de seuil, l'image IN de la figure 1 est vidéo codée dans la branche du filtre F1. Le temps d'encodage est d'environ 1385 ms ce qui est bien inférieur à un encodage complet de tous les champs du bloc d'adresse estimé à 4000 ms.
- Autre exemple d'attributs d'une image en rejet :
   V= AVENUE GAMBETTA
   CV=0,98
   N=?9
   CN= 0,0
   CG= 0,0

   Le taux de confiance CV étant inférieur à 0.990 (valeur de seuil S1), l'image est rejetée par le filtre F1. Elle est envoyée vers le filtre F2. Le taux de confiance CG est inférieur à 0.93. L'image est rejetée par le filtre F2 et est envoyée sur le filtre F3. Le taux de confiance CV étant supérieur à 0,85, on applique le codage VC3 de confirmation sur le nom de la voie et ensuite un codage par clavier pour entrer le numéro dans la voie. Le temps d'encodage est égal à environ 1600 ms = confirmation voie (environ 1385 ms) + saisie numéro dans la voie (environ 215 ms).
- Autre exemple d'attributs d'une image en rejet :
   V= RUE DE MONTFAUCON
   CV= 1,0
   N=6??6
   CN= 0,0
   CG= 0,0

   Le processus de vidéo codage est identique celui de l'exemple de la figure 1 et le temps d'encodage est donc d'environ 1385 ms.
- Autre exemple d'attributs d'une image en rejet :
   V = RUE AUGUSTE PERRET
   CV=0,98
   N=8
   CN= 0,99
   CG= 0,97

   L'image est rejetée par le filtre F1 car le taux de confiance CV est inférieur à S1. Elle est envoyée vers le deuxième filtre F2. Le taux de confiance conjoint CG est supérieur à 0,85 de sorte que le vidéo codage VC2 est appliqué. Le temps d'encodage moyen est égal ici à environ 1309 ms.
- Autre exemple d'attributs d'une image en rejet :
   V= PLACE FRANCOIS TRUFFAUT
   CV= 0,62
   N= 2
   CN=0,83
   CG=0,51

L'image est dans ce cas d'exemple rejetée par les filtres F1,F2,F3 et F4 et sera vidéo codée en VC5. Le temps d'encodage est de 4000 ms. Il s'agit du cas le moins favorable.

Comme illustré sur la figure 2, à la suite d'un codage opérateur VC1 à VC4, le vecteur d'attributs d'image AT associé à une image IN en cours de codage vidéo est complété ou modifié et une évaluation E du vecteur d'attributs d'image est réalisée à la suite de chaque opération de codage vidéo pour pouvoir décider de l'arrêt du codage vidéo pour cette image en rejet (l'information d'adresse est alors complètement reconnue) . Dans le cas où l'arrêt du codage vidéo n'est pas décidé à un certain niveau de filtrage, on enchaîne le traitement sur le niveau suivant de filtrage comme illustré par les flèches sur la figure 2.

La figure 2 fait bien apparaître la structure en cascade des filtres avec à chaque niveau de filtrage, une action opérateur telle que VC1,VC2,VC3,VC4 et une évaluation E associée. Comme les actions opérateur VC1 à VC4 sont spécifiques aux filtres F1 à F4 respectivement, les lignes de traitements F1-VC1-E ; F2-VC2-E etc... seront implémentées dans des unités ou consoles de codage vidéo différentes sur lesquelles interviennent des opérateurs spécialisés par catégorie de rejet.

Sur la figure 2, on a également illustré un superviseur R qui ajuste automatiquement de façon dynamique les valeurs de seuil S1 à S4 dans les filtres F1 à F4.

Pour garantir la rentabilité du traitement par codage vidéo, la cascade de filtres ne pourra comporter que les trois premiers niveaux de filtrage F1 à F3 et si une image en rejet n'est pas identifiée par l'un au moins de ces trois niveaux de filtrage, elle ne sera pas traitée par codage vidéo et l'objet postal correspondant sera trié manuellement. On arrive ainsi à obtenir un débit moyen de traitement par codage vidéo de l'ordre de 2300 objets postaux à l'heure. Plus particulièrement, dans un procédé de tri acheminement-distribution, le traitement d'images en rejet par codage vidéo selon l'invention avec les trois premiers niveaux de filtres F1-F3 pourra être mis en oeuvre en ligne avec le processus d'évaluation automatique par OCR si par exemple les filtres F1-F3 sont réglés pour classifier seulement des images dans lesquelles l'information postale de tri-acheminement a été déjà reconnue sans équivoque par l'OCR du fait que les codages vidéo VC1 à VC3 peuvent se faire sensiblement dans le même temps de traitement qu'un vidéo codage de tri-acheminement..

## Revendications

1. Procédé pour le traitement par codage vidéo d'images (IN) d'objets postaux comportant chacune une information d'adresse, ces images ayant été rejetées par un processus d'évaluation automatique d'adresse par OCR dans une machine de tri postal, le processus d'évaluation d'adresse produisant, pour chaque image en rejet, un vecteur d'attributs (AT) comprenant des taux de confiance (CV,CN) associés respectivement aux valeurs de champs du bloc d'adresse, **caractérisé en ce qu'**il consiste :
a) à envoyer vers un processus de codage vidéo, avec chaque image en rejet, le vecteur d'attributs d'image (AT) produit pour l'image en rejet par le processus d'évaluation d'adresse,
dans au moins une unité ou console de codage vidéo (VC1-VC5),
b) à appliquer les taux de confiance du vecteur d'attributs (AT) de l'image en rejet à des filtres organisés en cascade pour définir plusieurs niveaux de filtrage (F1- F4) des taux de confiance, lesquels niveaux de filtrage ont des seuils de comparaison (S1 à S4) avec les taux de confiance qui sont réglés pour filtrer chacun une parmi plusieurs catégories de rejet différentes auxquelles sont associés respectivement dans le processus de codage vidéo autant de traitements de codage vidéo spécifiques différents (VC1-VC4), lesdits filtres étant enchaînés en cascade selon un ordre croissant du temps de codage opérateur pour effectuer lesdits traitements de codage vidéo spécifiques,
et quand une catégorie de rejet correspondant à l'image en rejet est identifiée sur un niveau de filtrage, à faire suivre ce filtrage par les étapes suivantes :
c) appliquer le traitement de codage vidéo (VC1-VC4) spécifique à cette catégorie de rejet sur l'image en rejet pour récupérer une information de codage vidéo,
d) compléter ou modifier le vecteur d'attributs (AT) de l'image en rejet à partir de l'information de codage vidéo,
e) évaluer (E) le vecteur d'attributs de l'image en rejet complété ou modifié pour détecter une condition d'arrêt du codage vidéo ou une poursuite de la catégorisation de ladite image en rejet dans un niveau de filtrage subséquent de ladite cascade de filtres.

2. Procédé selon la revendication 1, dans lequel les différents niveaux de filtrage (F1-F4) avec les traitements de codage vidéo (VC1-VC4) et les évaluations (E) du vecteur d'attributs d'image (AT) correspondant forment un ensemble de lignes de traitement qui sont réalisées respectivement dans des unités ou consoles de codage vidéo différentes.

3. Procédé selon l'une des revendications 1 ou 2, dans lequel chaque niveau de filtrage (F1-F4) consiste à comparer à une valeur de seuil (S1-S4) au moins un taux de confiance (CV,CN) associé à un champ du bloc d'adresse de l'image en rejet ou encore le taux de confiance conjoint (CG) correspondant au produit des taux de confiance associés aux champs du bloc d'adresse.

4. Procédé selon revendication 3, dans lequel les valeurs de seuil (S1-S4) sont ajustées de manière dynamique par un superviseur (R) contrôlant les proportions d'images en rejet passant à travers les différents niveaux de filtrage.

5. Procédé selon l'une des revendications 1 à 4, dans lequel l'information d'adresse est une information d'adresse de distribution postale, dans lequel le bloc d'adresse comprend un premier champ (V) indicatif d'un nom de voie et un second champ (N) indicatif d'un numéro dans la voie, dans lequel le vecteur d'attributs d'image (AT) comprend un premier taux de confiance (CV) associé au premier champ (V) du bloc d'adresse, un second taux de confiance (CN) associé au second champ (N) du bloc d'adresse, et un taux de confiance conjoint (CG) égal au produit desdits taux de confiance associés aux dits premier el second champ du bloc d'adresse, el dans lequel la cascade de filtres et de traitements de codage vidéo spécifiques est constituée des niveaux de filtrage et traitement suivants :
a) si le premier taux de confiance (CV) est supérieur à une première valeur de seuil (S1) alors on saisit par vidéo codage (VC1) le numéro dans la voie ;
b) si le taux de confiance conjoint (CG) est supérieur à une seconde valeur de seuil (S2) alors on confirme par vidéo codage (VC2) simultanément le numéro dans la voie et le nom de la voie ;
c) si le premier taux de confiance (CV) est supérieur à une troisième valeur de seuil (S3) alors on confirme par vidéo codage (VC3) le nom de la voie et ensuite on saisit le numéro dans la voie.

6. Procédé selon la revendication 5, dans lequel la confirmation par vidéo codage est réalisée par synthèse vocale.

7. Procédé de tri acheminement et distribution d'objets postaux, **caractérisé en ce qu'**il utilise un traitement par codage vidéo d'images (IN) d'objets postaux selon l'une des revendications 1 à 6 dans lequel si aucune catégorie de rejet n'est identifiée pour une image en rejet à la suite de la cascade de filtrages, l'objet postal correspondant à l'image en rejet est envoyé dans un processus de tri manuel.

## Claims

1. A method of processing images (IN) of postal items by video coding, each image including address information, said images having been rejected by an automatic process of evaluating addresses by OCR in a postal sorting machine, the process of evaluating addresses producing for each rejected image an attribute vector (AT) comprising confidence ratings (CV, CN) respectively associated with the field values of the address block, the method being **characterized in that** it consists:
a) in sending to a video coding process, with the rejected image, the image attribute vector (AT) produced by the process of evaluating addresses for the rejected image,
in at least a video coding unit or console (VC1-VC5),
b) in applying the confidence ratings of the attribute vector (AT) of the rejected image to a cascade of filters defining various filtering levels (F1-F4) of the confidence ratings, said filtering levels having comparison thresholds (S1-S4) with the confidence ratings which are adjusted so as to filter each one amongst various different rejection categories to which are respectively associated in the video coding process a corresponding number of different specific video coding processes (VC1-VC4), said filters being organized in a cascade according to an increasing order of the operator coding time to perform said specific video coding processes,
and when a rejection category corresponding to the rejected image is identified at a filtering level, in causing said filtering to be followed with said steps:
c) applying the processing by video coding (VC1-VC4) specific to the rejection category on the rejected image to retrieve video coding information,
d) adding to or modifying the image attribute vector (AT) of the rejected image from the video coding information,
e) evaluation (E) of the attribute vector of the rejected image added to or modified so as to so as to detect a stopping condition of the video coding or to continue the categorizing of said rejected image at a subsequent filtering level of said cascade of filters.

2. A method according to claim 1, in which the various filtering levels (F1-F4) with the video coding processes (VC1-VC4) and the evaluations (E) of the corresponding image attribute vector (AT) form a set of processing lines which are implemented respectively in different video coding units or consoles.

3. A method according to claim 1 or claim 2, in which each filtering level (F1-F4) consists in comparing to a threshold value (S1-S4) at least one confidence rating (CV, CN) associated to a field of the address block of the rejected image or else the combined confidence rating (CG) corresponding to the product of the confidence ratings associated to the fields of the address block.

4. A method according to claim 3, in which the threshold values (S1-S4) are adjusted dynamically by a supervisor (R) monitoring the proportions of rejected images that are passing through the various filtering levels.

5. A method according to any one of claims 1 to 4, in which the address information is address information for postal inward sorting, in which the address block comprises a first field (V) giving a street name and a second field (N) giving a number in the street, in which the image attribute vector (AT) includes a first confidence rating (CV) associated with the first field (V) of the address block, a second confidence rating (CN) associated with the second field (N) of the address block, and a combined confidence rating (CG) equal to the product of said confidence ratings associated with said first and second fields of the address block, and in which the cascade of filters and specific video coding processes is constituted by the following filtering and processing levels:
a) if the first confidence rating (CV) is greater than a first threshold value (S1), then the number in the street is input by video coding (VC1);
b) if the combined confidence rating (CG) is greater than a second threshold value (S2), then both the number in the street and the name of the street are simultaneously confirmed by video coding (VC2); and
c) if the first confidence rating (CV) is greater than a third threshold value (S3), then the street name is confirmed by video coding (VC3), after which the number in the street is input.

6. A method according to claim 5, in which confirmation by video coding is performed by voice synthesis.

7. A method of sorting for outward sorting and inward sorting of postal items, **characterized in that** it makes use of processing by video coding images (IN) of postal items in accordance with any one of claims 1 to 6, in which if no rejection category is identified for a rejected image after the cascade of filters, then the postal item corresponding to the rejected image is sent to a manual sorting process.

## Patentansprüche

1. Verfahren zur Verarbeitung von Bildern (IN) von Postsendungen, die jeweils eine Adressinformation umfassen, durch Videocodierung, wobei diese Bilder durch einen automatischen Adressermittlungsprozess durch OCR in einer Briefsortiermaschine zurückgewiesen wurden, wobei der Adressermittlungsprozess für jedes zurückgewiesene Bild einen Attributvektor (AT) erzeugt, der Vertrauensraten (CV, CN) umfasst, die jeweils mit den Feldwerten des Adressblocks verknüpft sind, **dadurch gekennzeichnet, dass** es Folgendes umfasst:
a) Senden des durch den Adressermittlungsprozess für das zurückgewiesene Bild erzeugten Attributvektors des Bildes (AT) mit jedem zurückgewiesenen Bild an einen Videocodierungsprozess,
in mindestens einer Videocodierungskonsole oder -einheit (VC1 bis VC5),
b) Anwenden der Vertrauensraten des Attributvektors (AT) des zurückgewiesenen Bildes auf in einer Kaskade angeordnete Filter zum Bestimmen mehrerer Filterstufen (F1 bis F4) der Vertrauensraten, wobei die Filterstufen Vergleichsschwellen (S1 bis S4) für die Vertrauensraten aufweisen, die eingestellt sind, um jeweils eine unter mehreren unterschiedlichen Zurückweisungskategorien zu filtern, mit denen im Videocodierungsprozess jeweils genau so viele unterschiedliche spezifische Videocodierungsverarbeitungen (VC1 bis VC4) verknüpft sind, wobei die Filter in einer Kaskade in einer aufsteigenden Reihenfolge der Codierungszeit durch den Bediener zum Durchführen der spezifischen Videocodierungsverarbeitungen verkettet sind,
und wenn eine Zurückweisungskategorie, die dem zurückgewiesenen Bild entspricht, auf einer Filterstufe erkannt wird, dieser Filterung die folgenden Schritte folgen:
c) Anwenden der Videocodierungsverarbeitung (VC1 bis VC4), die für diese Zurückweisungskategorie spezifisch ist, auf das zurückgewiesene Bild, um eine Videocodierungsinformation wiederzugewinnen,
d) Ergänzen oder Ändern des Attributvektors (AT) des zurückgewiesenen Bildes ausgehend von der Videocodierungsinformation,
e) Bewerten (E) des Attributvektors des ergänzten oder geänderten zurückgewiesenen Bildes zum Ermitteln einer Bedingung des Abbruchs der Videocodierung oder einer Fortsetzung der Kategorisierung des zurückgewiesenen Bildes in einer nachfolgenden Filterstufe der Filterkaskade.

2. Verfahren nach Anspruch 1, wobei die verschiedenen Filterstufen (F1 bis F4) mit den Videocodierungsverarbeitungen (VC1 bis VC4) und den Bewertungen (E) des entsprechenden Attributvektors des Bildes (AT) eine Menge von Verarbeitungslinien bilden, die jeweils in verschiedenen Videocodierungskonsolen oder -einheiten ausgeführt werden.

3. Verfahren nach einem der Ansprüche 1 oder 2, wobei jede Filterstufe (F1 bis F4) darin besteht, mindestens eine Vertrauensrate (CV, CN), die mit einem Feld des Adressblocks des zurückgewiesenen Bildes verknüpft ist, oder auch die gemeinsamen Vertrauensrate (CG), die dem Produkt der Vertrauensraten entspricht, die mit den Feldern des Adressblocks verknüpft sind, mit einem Schwellenwert (S1 bis S4) zu vergleichen.

4. Verfahren nach Anspruch 3, wobei die Schwellenwerte (S1 bis S4) durch ein Überwachungsprogramm (R), das den Anteil der zurückgewiesenen Bilder überprüft, die die verschiedenen Filterstufen durchlaufen, auf dynamische Weise angepasst werden.

5. Verfahren nach einem der Ansprüche 1 bis 4, wobei die Adressinformation eine Adressinformation zur Postzustellung ist, wobei der Adressblock ein erstes Feld (V), das einen Straßennamen angibt, und ein zweites Feld (N) umfasst, das eine Nummer in der Straße angibt, wobei der Attributvektor des Bildes (AT) eine erste Vertrauensrate (CV), die mit dem ersten Feld (V) des Adressblocks verknüpft ist, eine zweite Vertrauensrate (CN), die mit dem zweiten Feld (N) des Adressblocks verknüpft ist, und eine gemeinsame Vertrauensrate (CG) umfasst, die gleich dem Produkt der Vertrauensraten ist, die mit dem ersten und dem zweiten Feld des Adressblocks verknüpft sind, und wobei die Kaskade der Filter und der spezifischen Videocodierungsverarbeitungen aus den folgenden Filter- und Verarbeitungsstufen gebildet ist:
a) wenn die erste Vertrauensrate (CV) größer als ein erster Schwellenwert (S1) ist, wird die Nummer in der Straße durch Videocodierung (VC1) erfasst;
b) wenn die gemeinsame Vertrauensrate (CG) größer als ein zweiter Schwellenwert (S2) ist, werden die Nummer in der Straße und der Name der Straße gleichzeitig durch Videocodierung (VC2) bestätigt;
c) wenn die erste Vertrauensrate (CV) größer als ein dritter Schwellenwert (S3) ist, wird der Name der Straße durch Videocodierung (VC3) bestätigt und danach die Nummer in der Straße erfasst.

6. Verfahren nach Anspruch 5, wobei die Bestätigung durch Videocodierung durch Sprachsynthese ausgeführt wird.

7. Verfahren zur Sortierung, Beförderung und Zustellung von Postsendungen, **dadurch gekennzeichnet, dass** es eine Verarbeitung von Bildern (IN) von Postsendungen durch Videocodierung nach einem der Ansprüche 1 bis 6 verwendet, und in dem, wenn nach der Filterkaskade keine Zurückweisungskategorie für ein zurückgewiesenes Bild erkannt wird, die Postsendung, die dem zurückgewiesenen Bild entspricht, an einen manuellen Sortierprozess gesendet wird.
